# EUROPEAN PATENT APPLICATION

(11) **EP 1 069 008 A1**
(43) Date of publication of application: **17.01.2001**
(21) Application number: 00600008.7
(22) Date of filing: 06.07.2000
(51) Int. Cl.: B60R 22/16

(54) **Energy absorption element for safety belts**

(30) Priority: 16.07.1999 GR 99100246
(71) Applicant: Giannakopoulos, Pavlos, 26225 Patra (GR)
(72) Inventor: Giannakopoulos, Pavlos, 26225 Patra (GR)

(57) **Abstract**

An energy absorbing element for a vehicle safety belt comprising two shoulder straps, the energy absorbing element comprising a generally oblong strap component (5) connected to one of the shoulder straps (20). The oblong strap component (5) comprises two superposed length of straps joined widthwise and lengthwise together by means of seams (8). The other extremity of the oblong strap component (5) is connected to an anchoring plate or a portion (20a) of the shoulder strap by means of stitches (5e). The oblong strap component (5) also comprises an opening for receiving an arm of a plate-like component (10) connected by its other arm (10a) to another portion (20c) of the said shoulder strap. The forces suddenly applied to the shoulder strap (20) of the safety belt are transferred to the component (10) which is displaced along the strap component (5), cutting the predifined deformation seams (8) and thereby dissipating energy.

## Description

The present invention refers to an energy absorption element and in particular as this regards the energy derived as a result of a suddenly exerted during collision force, where such an element adapted at a suitable point of a safety belt worn by the driver of a motor vehicle or the crew of an aircraft offers the possibility of managing the energy produced so that the adverse consequences to the persons fastened are minimised.

The invention refers to a safety belt with six hooking points, although it is not limited to the safety belts with this number of hooking points, designed for race and rally motor vehicles and aircrafts that consists of two shoulder straps extending above the shoulders of the seat belt's holder and of at least one strap called lap strap, which encircles and keeps firm the pelvis of a driver, pilot etc. whereas this strap can be connected to the shoulder straps by means of a safety buckle and, in addition, of two straps for the thighs that are connected with the same buckle allowing of anti-submerging protection. All straps are indirectly fixed to the motor vehicle's and/or aircraft's frame.

The use of energy absorption elements has become widely known in conjunction with the safety belts used in motor vehicles and/or aircrafts when it was observed that the forces suddenly exerted by the straps of safety belts to the persons fastened, who in case of collision tend to move forward due to inertia, result to an instantaneous high pressure impact on the chest, injury of vital organs of the underbelly and simultaneously to acceleration of the head to the front as well as inflection of the chestbone.

These elements however, known also are force limiters, that are necessarily adapted to the shoulder straps of such safety belts need further completion.

A type of such past technology energy absorption elements for safety belts, as described in the Patent Diploma U.S. 4854608, is that type of a safety belt with four hooking points for use in race cars comprising of two shoulder straps whereas an energy absorption and anti-submerging element is incorporated on one of them. This element consists of part of the shoulder strap, which at a suitable point it is folded in the shape of a double S so that its folded parts are transversely stitched together in a pre-arranged mode with the purpose when the force exerted on the shoulder strap, during collision, exceeds a predefined limit, the seams are cut off, absorbing thus part of the impact energy while limiting the adverse consequences produced by a high pressure instantaneous impact that is exerted to the holder wearing the belt. Due to the reason that the above mentioned strap is asymmetrically extended in relation to the other this results to body trunk twisting to forward direction on one side at an angle of torsion with so that the body is not submerged passing through the lap strap that surrounds the pelvis.

A disadvantage related to the use of such energy absorption elements of past technology is the excessive extension of the shoulder strap of the safety belt during the element's action being a consequence of the fact that due to the above mentioned cutting off of part of the strap folded in the shape of a double S by means of transverse seams the element's length is doubled and the shoulder strap is extended at a proportional length.

This fact essentially renders partly inoperative the safety belt due to the reason that inasmuch as excessive extension of the shoulder strap occurs the fastened side of the driver's body trunk can be excessively flung to the front resulting in his or her injury.

Another disadvantage related with the above mode of operation regarding past technology energy absorption elements is that if the element's length is reduced by half allowing a smaller extension of the shoulder strap the energy absorption capacity is also reduced by half respectively.

The above two disadvantages of the aforementioned past technology energy absorption elements regarding suddenly exerted forces render them unsuitable for being applied to safety belts of three, four, five and six hooking points.

Therefore a first major object of the present invention is to offer an energy absorption element suitable for beneficial adaptation to safety belts of three, four, five and six hooking points, due to the small extension length proposed with regard to the fastening system of the shoulder strap during its action whereas the length of the element remains the same before and after the element's action, as well as due to the linear, along the same element, cutting off performed by means of medially transverse stitching of the strap that entails a smooth, linear energy absorption and smaller operational space.

Furthermore, the above is achieved by reason of the fact that the proposed element's extension length is reduced to its half compared with those that are available in the market whereas its absorption capacity exhibits the same value with such elements of past technology.

Another type of such past technology energy absorption elements described in the same as above Patent Diploma is that type of a safety belt one shoulder strap of which incorporates a uniform born onto the end of the strap energy absorption element.

A disadvantage related to the use of this past technology element is that since its place of attachment is necessarily at the end of the shoulder strap, the strap's free fluctuation becomes impossible as this regards its suitable adaptation to the fastened driver's conditions of use.

An additional disadvantage related to the above mode of operation with respect to past technology energy absorption elements is that since these elements are permanently attached at the end of the shoulder strap they cannot be replaced following the element's possible operation in case of a possible collision.

Another disadvantage is that these past technology elements cannot be adapted to the safety belts, which are available in the market, seeing that the latter lack such elements.

Consequently, a second major object of the present invention is to offer an energy absorption element suitable for beneficial adaptation to safety belts of three, four, five and six hooking points due to the proposed independent energy absorption element and the shoulder strap's free end concerning the relevant per case fluctuation, which nevertheless exhibit the beneficial possibility for being both connected with the motor vehicle's and/or aircraft's frame including the possibility for the element's replacement, after its operation, as well as the new element's reconnection at the end of the same shoulder strap or even more the attachment of this energy absorption element posteriorly to the already in use safety belts that are now available in the market, which lack such elements.

A further disadvantage of past technology energy absorption elements, as they are specifically being used in relation to the safety belts of motor vehicles and/or aircrafts is the fact that they are designed in such a manner as to be activated, in case of collision, at a predefined force exerted by the driver, pilot or passenger, who is under inertia moving to the front whereas this force is usually predefined to correspond to a speed value on the order of 55 km per hour.

This fact renders the past technology energy absorption elements inoperative whereas they are not capable of offering protection within a wide range of collision speed values.

Subsequently, a third major object of the present invention is to offer an element, as this regards the proposed energy absorption element for safety belts of motor vehicles and/or aircrafts with two, three, four, five and six hooking points, which affords the beneficial possibility of being activated within a wide range of collision speed values and, more accurately, within a wide range of values regarding the required for activation suddenly exerted force whereas the said possibility is attributed to alternative methods of manufacture and operation of elements with preferred manufacturing material being that of which the straps are made provided that this element is capable of being cut-off and deformed lengthways by means of predetermined transverse seams of variable number lengthwise the energy absorption and anti-submerging element's deformation line.

Such as well as other objects, features and advantages of the present invention will become evident in the following detailed description with regard to indicative, preferred applications and the corresponding drawings attached in which:

### BRIEF DESCRIPTION OF DRAWINGS

Figure 1 illustrates a perspective view of the energy absorption element, according to the first preferred application of the invention, distributed as an independent end product before its connection to a suitable point onto the shoulder belt of the safety belt, which operates with linear cutting-off by means of transverse seams of yarn stitches.

Figure 2 illustrates a perspective view of the energy absorption element, according to the second preferred application of the invention, distributed as a uniformly born end product manufactured of the shoulder strap itself being connected at a suitable point of the strap and which operates just as the element shown in Figure 1.

Figure 3 illustrates a perspective view of the energy absorption element, according to a third preferred application of the invention, distributed as an independent end product before its connection to the end of the shoulder strap of the safety belt, which operates just as the elements shown in Figure 1 and 2.

Figures 4A, 4B illustrate a side view of a typical marketable energy absorption and anti-submerging element of past technology, before and after its action, manufactured of and born at a suitable point of the right shoulder belt of a safety belt.

Figures 5A, 5B illustrate a side view of the uniformly born by part of the right shoulder strap, element of the invention shown in Figure 2, before and after its action.

Figure 6A illustrates a perspective view of the energy absorption and anti-submerging element shown in Figures 2, 5A of the second preferred application of the invention, before its action, born at a suitable point of the right shoulder strap of a safety belt of six hooking points fixed onto a race car's and/or aircraft's frame.

Figure 6B illustrates a perspective view of the safety belt shown in Figure 6A however with the annex of an additional element pertaining to the second preferred application of the invention before its action that is born at a suitable point of the left shoulder belt, and with evident differentiation as this regards its smaller operational length in relation to the other element.

Figure 7 illustrates a perspective view of the mobile buckle component that is connected to the energy absorption elements of the invention as well as the fastening system of the safety belt's shoulder strap shown in Figures 1, 2 with respect to the first and second preferred applications of the invention respectively.

Figure 8 illustrates a perspective view of the mobile buckle component shown in Figure 3 that is connected to the energy absorption element of the invention as well as the terminal fastening component of the safety belt's shoulder strap pertaining to the third preferred application of the invention.

Figure 9 illustrates a perspective view of the fixed hook component with lock, shown in Figure 3, that is connected to the end of the energy absorption element of the invention with regard to the third preferred application of the invention.

Figure 10A illustrates a perspective view of the energy absorption and anti-submerging element pertaining to the first preferred application of the invention, shown in Figure 1, before its action.

Figure 10B illustrates a side view of the element shown in Figure 10A before its action.

Figure 11A illustrates a perspective view of the element shown in Figure 10A after its action.

Figure 11B illustrates a side view the element shown in Figure 11A after its action.

Figure 12A illustrates a perspective view of part of the safety belt's shoulder strap that is connected to the first energy absorption element of the invention proposed, as shown in Figs. 1, 10A, case in which the element's connection is implemented onto the shoulder strap that surrounds the element before its action.

Figure 12B illustrates a side view of the shoulder strap shown in Figure 12A that surrounds the element before its action.

Figure 13 A illustrates a perspective view of the shoulder strap shown in Figure 12A with its attached element after its action.

Figure 13B illustrates a side view of the shoulder belt shown in Figure 13A with its attached element, after its action.

Figure 14A illustrates a perspective view of part of the right shoulder strap, according to the second preferred application of the invention shown in Figs. 2, 6A, with the energy absorption element manufactured of part of the same shoulder belt as well as the insertion and connection of the mobile buckle component shown in Figure 7, but before the element's action.

Figure 14B shows a side view of the right shoulder strap shown in Figure 14A regarding the safety belt shown in Figure 6A, together with the energy absorption and anti-submerging element that is born on the strap before its action.

Figure 15A illustrates a perspective view of part of the right shoulder strap of the safety belt shown in Figs. 14A, 14B, however after the element's action, whereas this element operates just as the element of the first application.

Figure 15B illustrates a side view of part of the right shoulder strap shown in Figure 15A with its attached element after its action.

Figure 16A illustrates a perspective view of the independent energy absorption and anti-submerging element of the third preferred application of the invention shown in Figure 3 before the element's action.

Figure 16B illustrates a side view of the independent element shown in Figure 16A before its action.

Figure 17A illustrates a perspective view of the independent element shown in Figure 16A after its action.

Figure 17B illustrates a side view of the independent element shown in Figure 17A after its action.

Figure 18A illustrates a dynamic diagram of the force exerted, in case of collision, onto the right and left shoulder straps of a safety belt by the under inertia moving to the front fastened driver, pilot etc. when the energy absorption and anti-submerging element attached to the shoulder strap is not used (discontinuous lines) as well as when the energy absorption and anti-submerging element attached to the right shoulder strap of the safety belt shown in Figure 6A is used (continuous lines).

The figures 18B, 18C illustrate an elevation of the energy absorption and anti-submerging element of the second preferred application of the invention, that is born onto the safety strap's right shoulder belt, before and after its action, in conjunction with the temporal points specified in the diagram shown in Figure 18A.

Figure 19A illustrates a dynamic diagram of the force that, in case of collision, is exerted onto the right and left shoulder belt of a safety belt when an attached to the two shoulder belts energy absorption and anti-immersing element is not used (discontinuous lines).

Figure 19B illustrates a dynamic diagram of the force exerted, in case of collision, is exerted onto the right and left shoulder straps of the safety belt shown in Figure 6B when an attached to both two shoulder straps energy absorption and anti-submerging element is used (continuous lines) pertaining to the second preferred application of the invention.

### DETAILED DESCRIPTION OF THE PREFERRED APPLICATIONS

With reference to the accompanying drawings we will describe indicative preferred applications of the invention.

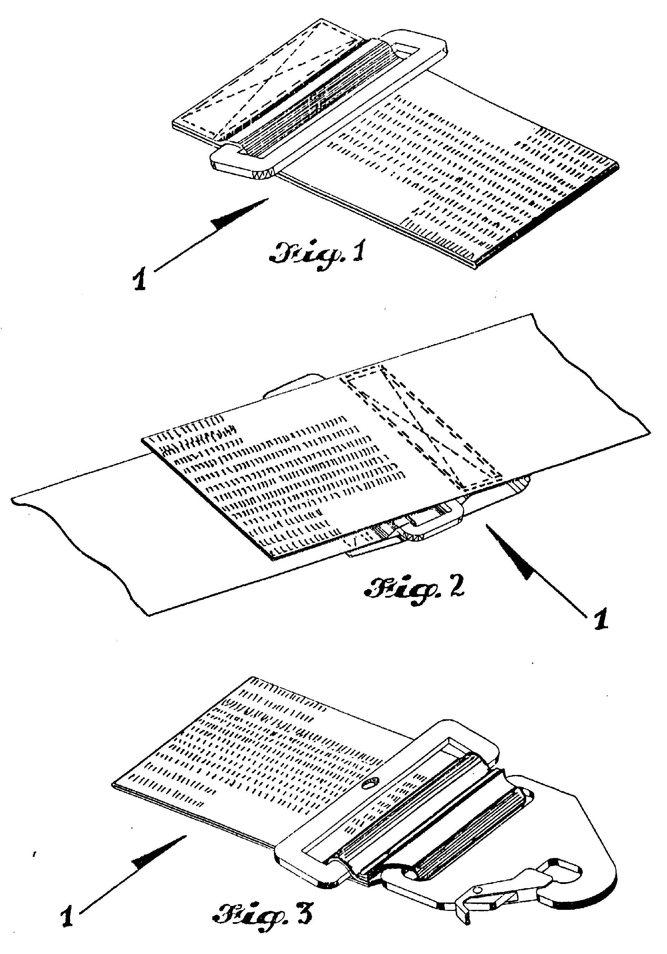

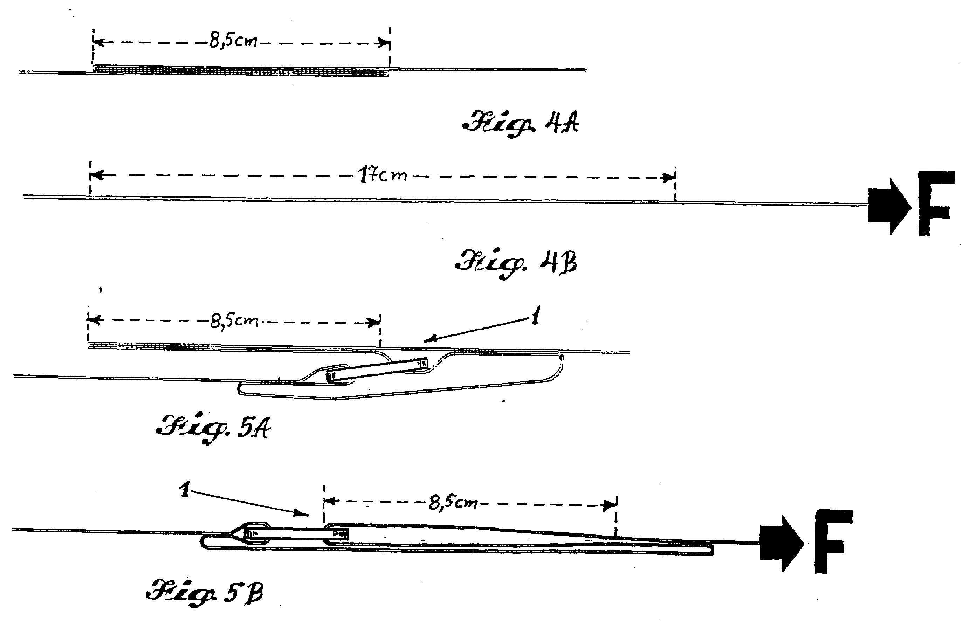

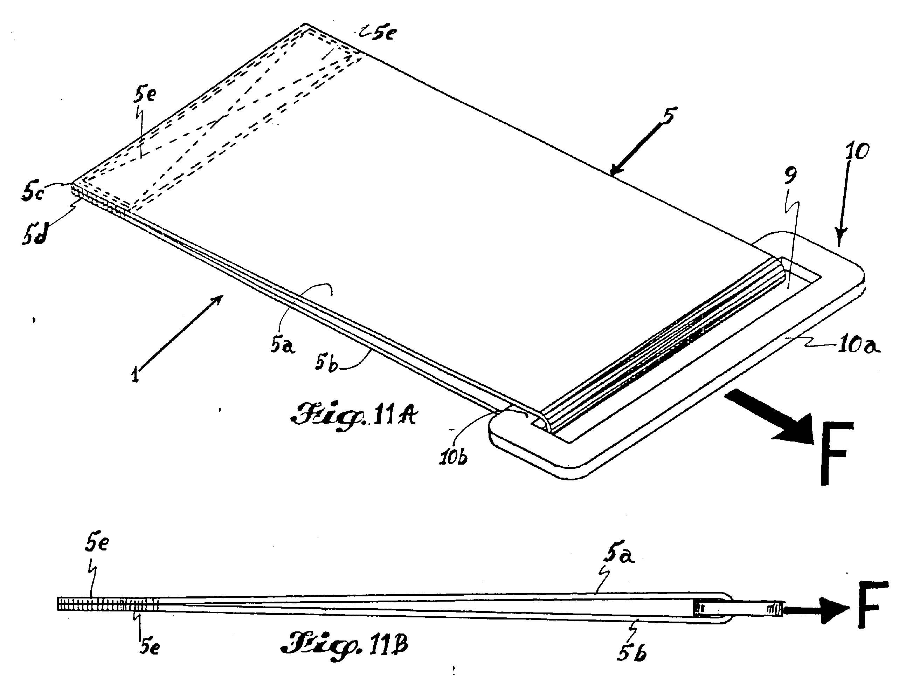

As a marketable end product the energy absorption and anti-submerging element 1 of the invention, according to the first preferred application of the invention shown in Figs. 1, 10A, 10B, 11A, 11B, 12A, 12B, 13A and 13B, the second preferred application of the invention shown in Figs. 2, 5A, 5B, 6A, 6B, 14A, 14B, 15A and 15B, and the third preferred application of the invention shown in Figs. 3, 16A, 16B, 17A and 17B, is a rectangular component with its parallel edges 1a, 1b, both of equal length, having a greater length in relation to the other parallel edges 1c and 1d, also both of equal length. In correspondence to this arrangement the length of element 1 is considered to be the length of sides 1a, 1b and the width of the element 1 is considered to be the length of the sides 1c, 1d. The element 1 is shown to have greater volume close to edge 1d due to the configuration at this region as this regards the attachment of the load transfer component 10 to the element 1 with respect to forces exerted to the safety fastening system such as the shoulder straps of safety belts with two, three, four, five, six or more hooking points fixed onto the frame of motor vehicles and/or aircrafts.

Close to edge 1d of the element regarding to the third preferred application the fixed hook component is additionally attached with which the element 1 is firmly fixed onto the motor vehicle's and/or aircraft's frame.

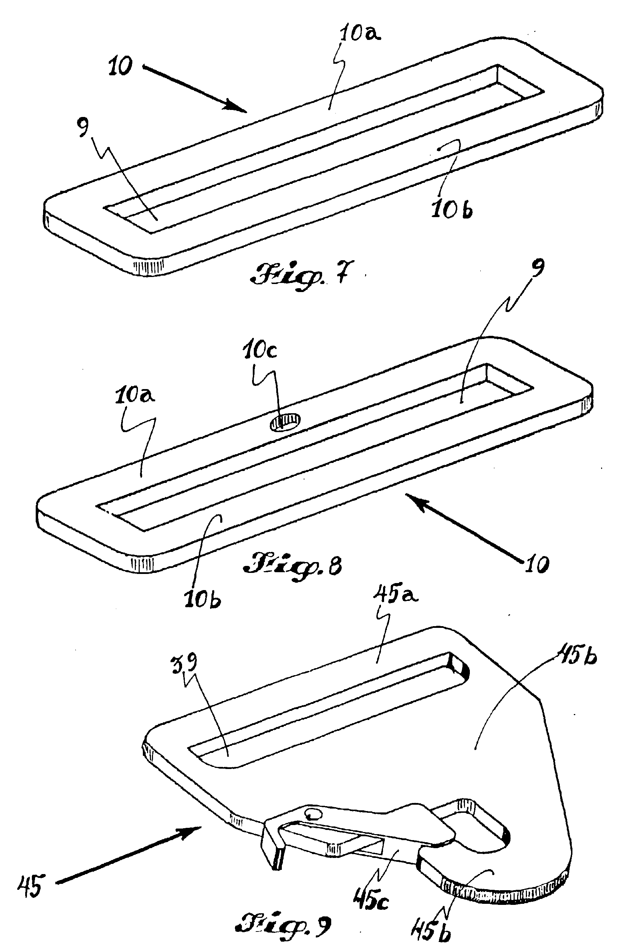

The element 1 shows, close to edge 1d, the opening 6 at its transverse length, from which the arm 10a of the mobile component 10 protrudes that transfers to the element 1 the force suddenly exerted to the fastening system of the shoulder straps of the safety belt. The arm 10a of the third preferred application bears medially a hole 10c. The element 1 is connected by means of the arm 10a of the mobile component 10 shown in Figure 7 with regard to the first and second application of the invention, as well as through the hole 10c of the arm 10a of the mobile component 10 shown in Figure 8 with regard to the third application of the invention, to the fastening system of shoulder straps of safety belts or the safety system that each time is employed. Element 1 bears, close to edge 1d, a suitable point 5e with which the element 1 is connected to a fixed point of the shoulder strap concerning the first and second application of the invention whereas in the third application the point 5e is connected with the fixed hook component 45.

Element 1 includes on one hand the properly fashioned weft-knitted body made of the strap itself and on the other the suitably adapted to it mobile component 10 that transfers the load to the body of element 1 from the existing fastening system of shoulder straps of the safety belt, case in which when a force exerted to the mobile component 10 exceeds a predefined value the latter is moving lengthwise the strap's predefined transverse deformation seams or any other suitable weft-knitted material so that the energy of the suddenly exerted force is absorbed during the deformation of the element 1.

According to an indicative preferred application of the invention, as illustrated in Figures 1, 2, 3, 6A, 6B, 10A, 14A and 16A, the element 1 operates with linear cutting-off of medially transverse seams made of yarn stitches of the adjoined parts of the strap or any other suitable weft-knitted material or other composition of resistant material that are appropriate for being stitched with any kind of resistant yarn.

In this case, the length of the suitable belt used is approximately the double of the length of the element 1, being offered as an end product so that the possibility of the strap's folding at the ends of edge 1c is afforded.

A desirable number of transverse seams of yarn stitches 8 is provided extending lengthwise above and below the folded strap's main surface that are stitching in a predefined manner the adjoining sides of the belt. The transverse seams extend from the upper terminal points 6a where the cutting off commences until lower down to the folding ends of the strap, close to edge 1c, where the cutting off is terminated. At the end of edge 1d of the element 1 the free ends of the strap form the opening 6 where the arm 10a of the mobile load transfer component 10 is inserted and then the ends are strongly stitched together.

As illustrated in Figures 7, 8 the independent mobile load transfer component regarding the force exerted onto the strap of the fastening system comprises of a uniform plate 10, of which a first segment is defined at its transverse length by means of the arm 10a extending almost in parallel to the strap's main surface, and a second segment defined by means of the arm 10b connecting the mobile component 10 into the opening 6. Medially of the two segments consisting of the arms 10a, 10b the opening 9 is born with its width corresponding approximately to the width of the cut-off strap that passes though the above opening before the folding and stitching of the ends at the point 5e when the component 10 cannot exit anymore and is, consequently, trapped into the opening 6, being constrained by the transversely extended arm 10b, which extends during the entire width of the cut-off energy absorption and anti-immersing element made of strap during the element's action.

In contrast to the past technology energy absorption and anti-submerging medium, as it is known with regard to its application to the safety strap's shoulder belt for use in race cars, which comprises of a uniform shoulder strap, with its part having the shape of a double S being purposed to be cut - off, the proposed in the present invention energy absorption and anti-submerging medium is a system composed of two and three elements that consists on one hand of the strap itself and the mobile component 10, as this regards the first and the second application of the invention shown in Figures 1,2, and, on the other, of the strap itself, the mobile component 10 as well as the fixed hook component 45 with respect to the third application of the invention shown in Figure 3.

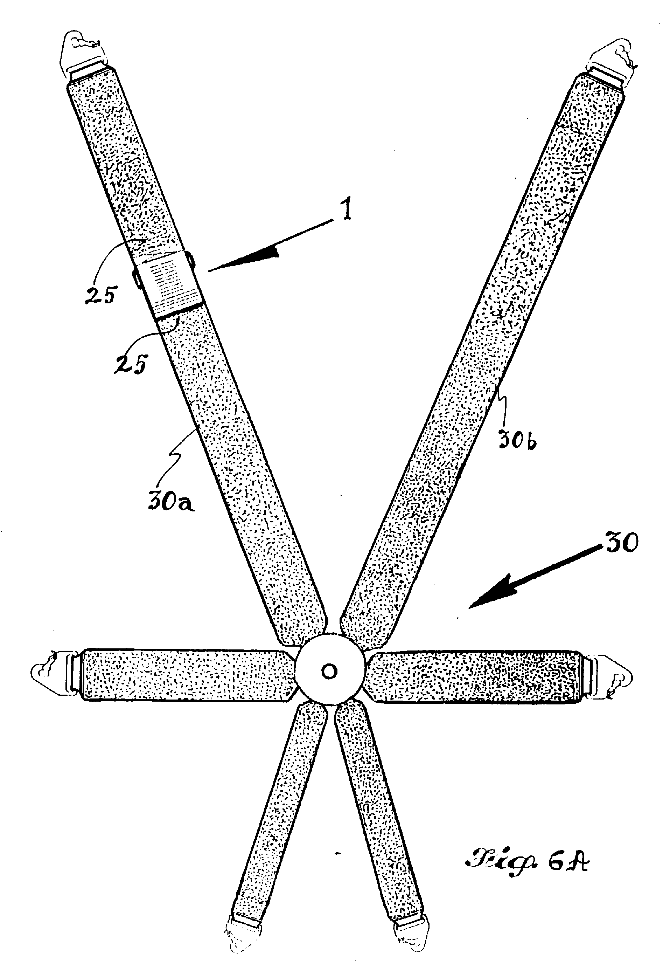

With the use of the independent mobile load transfer component 10 the implementation of the object of invention regarding the provision of a beneficially smaller extension length is achieved, offering yet great capacity for energy absorption concerning the fastening system during the element's action. This becomes obvious also by correlating the images illustrated in Figures 4A-4B and 5A-5B respectively, where the operation of a marketable past technology energy absorption element is illustrated as described in the above mentioned Patent Diploma where it belongs, and the element proposed according to the present invention respectively. In detail, with reference to Figure 4A, if we estimate by approximation the length of the shoulder strap, which is folded in the shape of a double S and stitched in order to be cut off in a predefined manner during collision, to correspond to 8.5 cm then in the Figure 4B, after the seams' cutting off following a collision, the shoulder strap is released and extended at the double of its element's length (i.e. 17 cm).

In Figure 5A the length of the shoulder strap that is folded and stitched is the same with that of a strap being available in the market (i.e. 8.5 cm) manufactured so as to be cut off in a predefined manner by the same force while providing the same energy absorption and then, as shown in Figure 5B, the shoulder strap is extended during collision at the same length (i.e. 8.5 cm) after the element's action and the cutting off of the seams in a predefined manner.

On the grounds of the above comparison it becomes evident the beneficially smaller operational length of the element 1 of the invention and, correspondingly, the extension of the shoulder strap by its half whereas the energy absorption can be still ampler.

This results in a minor flinging of the fastened driver's or pilot's body trunk to the front during collision and thus avoiding any unpleasant consequences due to his/her impact onto the steering wheel, panel etc.

By employing the energy absorption and anti-submerging element bearing a capable of being cut off strap by means of transverse seams additional advantages are achieved such as the smoothing out of the strap's cutting off process by reason of the linear and parallel to the strap's main surface shifting of the mobile component 10 transferring the load to the element 1, the linear shifting of the point of application of the force exerted during the strap's cutting off process and, subsequently, the progressive simultaneous deformation of the cut off strap as well as the force distribution lengthwise the arm 10b and, as matter of fact, widthwise the strap's seams 8 that are being cut off during the entire cutting off process. Thus the use of the independent load transfer component 10 of the element 1 offers the possibility of incomparably more precise and convenient designing of the entire energy absorption and anti-submerging element for shoulder strap fastening systems of safety belts seeing that its behaviour is accurately predictable in action.

The elements 1 providing energy absorption and anti- submerging of the invention depending on the nominal value of the energy that are called to absorb in each case are manufactured by means of a proper planning of their parameters that may primarily consist in the number of the transverse seams of yarn stitches lengthwise the strap's cutting off in conjunction with the resistance of the stitching yarn.

The total length of the element that determines the active length of the linear shifting of the arm lOb lengthwise the strap consists, in every case alike, a factor that specifies the nominal value of the energy absorbed.

According to a beneficial preferred application of the invention aiming to the implementation of the object of the invention with respect to the provision of an energy absorption and anti-submerging element that affords the advantageous possibility of being activated and at the same time offering protection within a wide range of collision speed values, the changing of the defined as above variable parameters is proposed in such a manner as to afford the change of the resistance exercised lengthwise the element 1 during its cutting off and deformation.

For example, according to the preferred application of the invention, as illustrated in Figures 1, 2, 3, 6A, 10A, 14A and 16A, the element 1 becomes of a variable lengthwise resistance accompanied by the D1, D2 transverse seams' change of width lengthwise the element's strap.

Indicatively, the energy absorption and anti-submerging element may consist of the folded strap whereas its stitching width D1 to be initially on the order of 4cm and it may then become D2 on the order of 6cm.

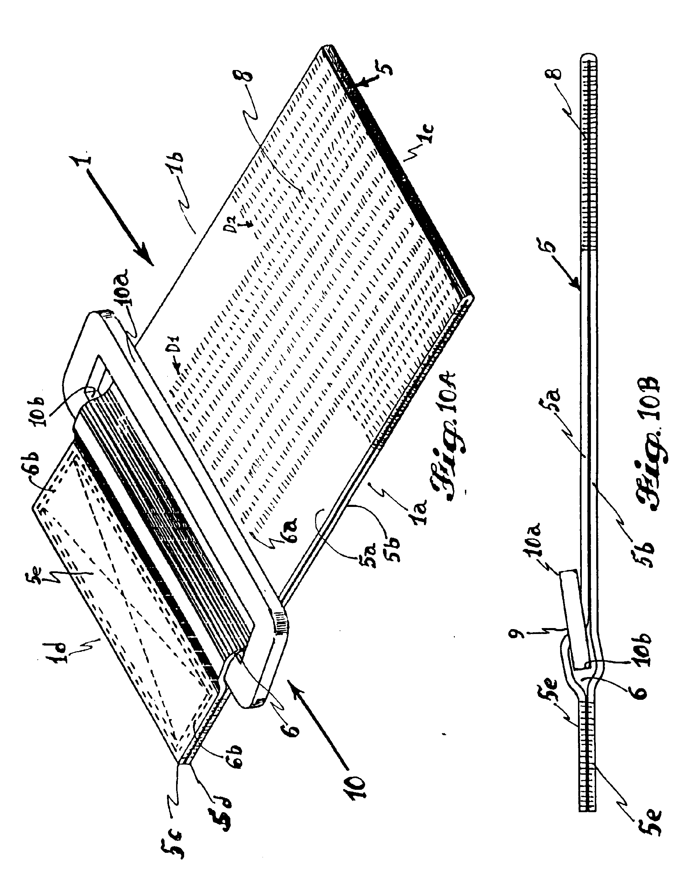

According to a first indicative preferred application of the invention, as illustrated in Figures 1, 10A,B, 11A-B, 12A-B and 13A-B, the element 1 is proposed to operate with linear cutting off by means of the transverse seams 8. In this case the length of strap 5 used is the double of the element 1 delivered as an end product (Fig. 1) so that the possibility for the folding of strap 5 at the ends of edge 1c is afforded. According to the illustrated application (Fig. 10A) a desirable number of transverse seams 8 made of yarn stitches is provided that stitch in a pre-arranged manner the adjacent sides 5a, 5b, widthwise and lengthwise, above and below the main surface of the strap 5. The transverse seams 8 extend from the upper terminal points 6a where cutting off commences until lower below to the folded ends of the strap 5, close to edge 1c, where the cutting off is terminated. At the end of edge 1d of the element 1 the free ends 5c, 5d of the strap 5 form the opening 6 where the arm lOb of the mobile load transfer component 10 is inserted whereas next the ends 5c, 5d are adjoined and resistantly stitched at the points 5e by means of yarn 6b and afterwards this independent element 1 of the invention is connected at a suitable point of the shoulder strap of the safety belt.

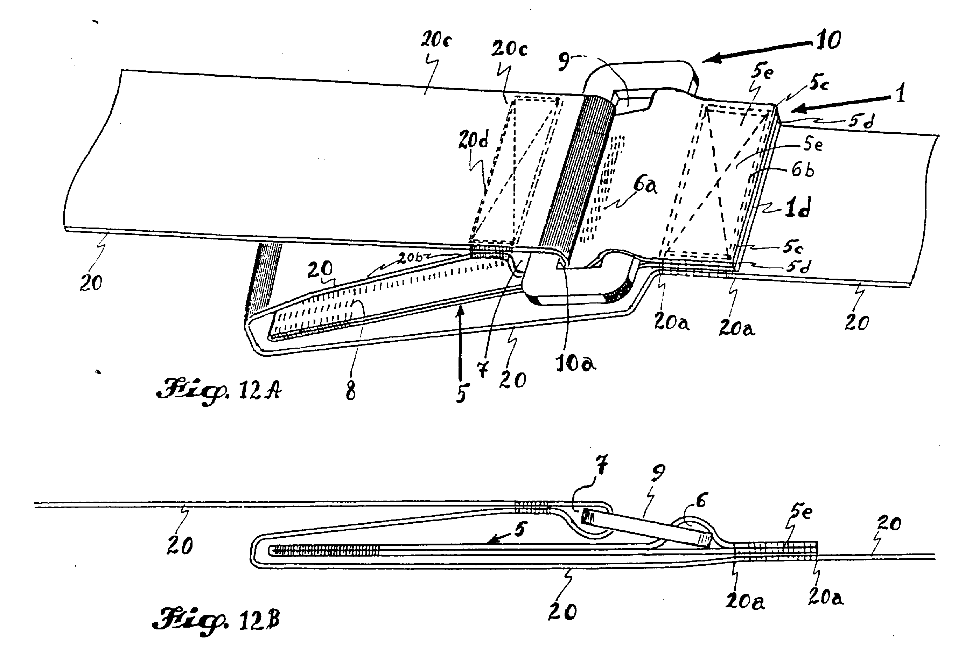

More analytically, as illustrated in Figure 12A, the element 1 is surrounded in a specific manner by part of the right shoulder strap 20 of the safety belt, and, in particular, the edge 1d of the element 1 that bears its stitched ends 5c, 5d is very resistantly stitched at the points 5e onto the part of the shoulder strap at its point 20a whereas then the free end of strap 20 encompasses the element 1 and passes through the opening 9 of the mobile component 10. Afterwards the shoulder strap 20 folds enclosing thus the arm 10a of the mobile component 10 into the opening 7 that is formed by the shoulder strap 20. The folded sides 20b, 20c of the shoulder strap 20 are very resistantly stitched at their contact points 20d.

In Figure 12B a side view of the connection of element 1 with the shoulder strap 20 is illustrated before its action.

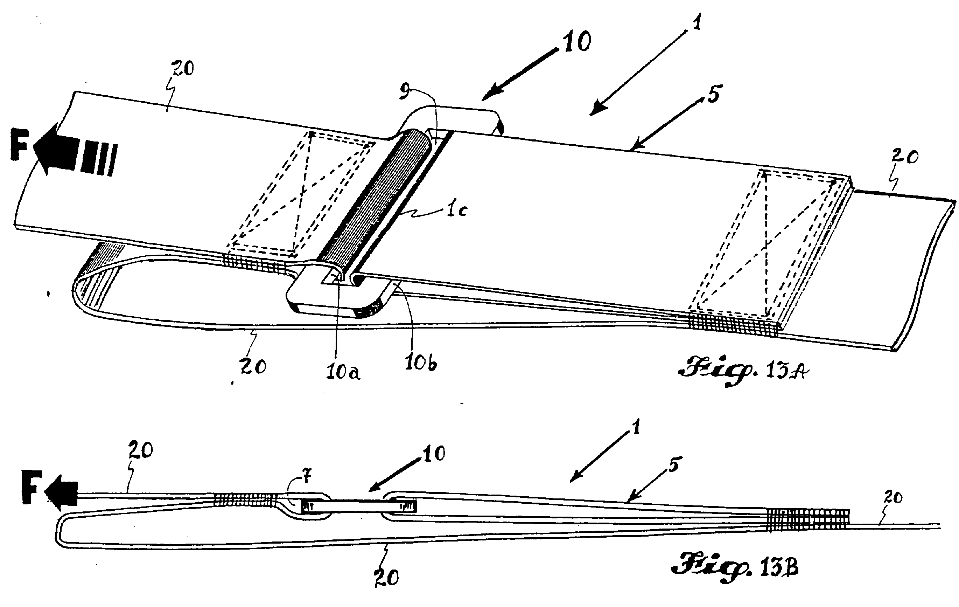

As illustrated in Figure 13A the mobile plate component 10 has been linearly shifted under the influence of force F and in parallel to the main surface of the element 1, and the arm 10b has cut the yarn seams 8 and terminated close to edge 1c of the element 1 resulting in the absorption of the energy derived by the suddenly exerted force during the deformation of element 1.

In Figure 13B a side view of the above Figure 13A.

The element 1 of the first application (Figs. 1, 10A, 12A) described above is connected at that height of the shoulder strap 20 allowing thus its passing above and backwards the fastened driver's shoulder etc.

With the application of element 1 exclusively onto the right shoulder strap of the safety belt the asymmetrical extension between the two shoulder straps is achieved so as the right side of the fastened driver's etc. body trunk is projected and twisted further to the front than its other side that is retained in its place with the result that the body does not glide through the middle lap strap of the safety belt implying that the body's anti-submerging and, simultaneously, energy absorption during collision are achieved.

Due to the advantageous application of element 1 onto the right shoulder strap provided its very small extension during the action of the element 1 the possibility of extending the use of element 1 onto the other, the left shoulder strap, is implied with regard to providing additional energy absorption and thus avoiding any unpleasant injuries when a collision occurs; however this is achieved by means of the element's smaller operational length so that both shoulder straps, right-left, are asymmetrically extended between them allowing for anti-submerging properties.

According to the second alternative preferred application of the invention, as illustrated in Figs. 2, 6A-B, 14A-B and 15A-B, the element 1 is proposed to be born by the same strap and manufactured of the safety belt's shoulder strap itself whereas the connection is made at the height 25 of the right shoulder strap 30a that passes above and backwards the fastened driver's etc. shoulder with regard to the safety belt 30 (Fig. 6A) with six hooking points adapted at a resistant point of the motor vehicle's and/or aircraft's frame whereas the same results with respect to the previous first application of the invention during the operation of the element 1 are offered.

In this second application a small segment of the right shoulder strap 30a of the safety belt 30 is folded at its height 25 approximately as much as the length of element 1 thus forming two sides 25a, 25b, which are stitched with seams 8 according to the indicative exemplary mode of the first application of the invention described above. Then the free end of the right shoulder strap 30a passes though the opening 9 of the mobile component 10 and after having enclosed the arm 10b is adjoined to the surface of the strap's other end where at the point 5e the two sides are strongly stitched thus forming the opening 6 for the reception and trapping of the arm 10b of the mobile load transfer component 10 which results to the fact that the component 10 cannot exit anymore and is trapped into the opening 6, being constrained by the transversely extended arm 10b, which is extended widthwise the cut off strap 30a during the action of the energy absorption element 1 of the strap 30a. Afterwards, the shoulder strap 30a folds in the opposite direction and is directed to its connection with the other arm 10a of the mobile component 10.

Thus, the shoulder strap 30a folds at a predefined length a-b and then is twisted to its opposite direction passing through the opening 9 of the lower side of the mobile component 10 and surrounds the arm 10a thus forming the opening 7 for the reception and trapping of the other arm 10a of the mobile component 10 after the folded, adjacent parts of the shoulder strap 30 are resistantly stitched at point 25c. The predefined length a-b of the folded part of the shoulder strap 30a is employed as a tolerance segment providing free movement of the mobile component 10 during its linear shifting and during the element's action whereas this tolerance length corresponds by approximation to the length a' - b' of the seams 8 of the element.

Under the action of force F the arm 10b of the mobile component 10, having being engaged in linear, parallel to the main surface of element 1 (Fig. 15A), movement, cuts off the seams 8 and terminates close to edge 1c of element 1 resulting in the absorption of the energy derived from the suddenly exerted force during the deformation of element 1 whereas it employs for its shifting the predefined tolerance segment a-b of the shoulder strap 30a of the safety belt 30.

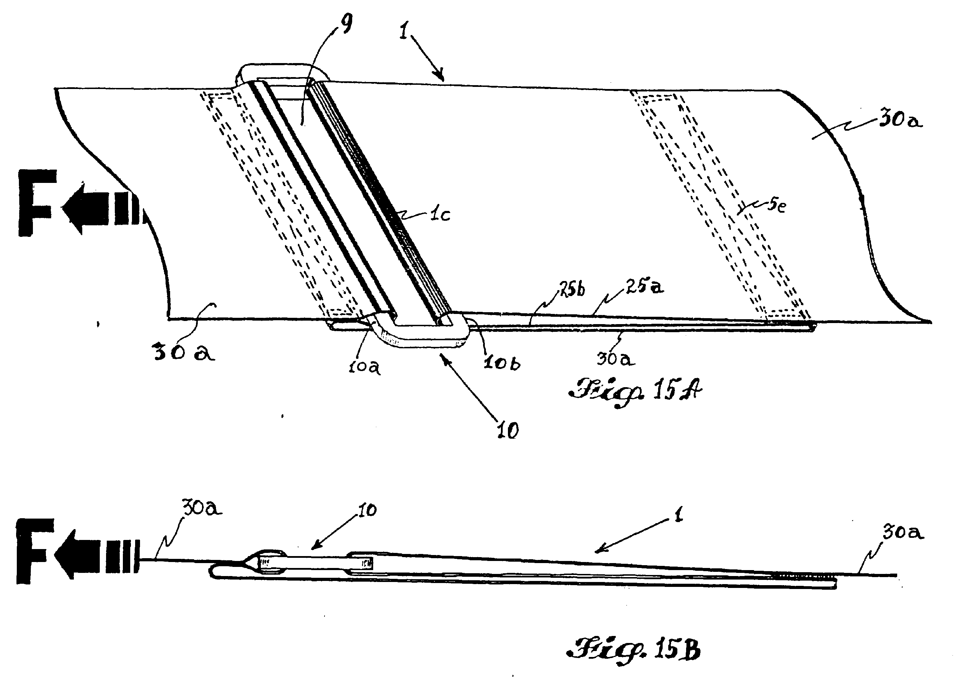

In Figure 15B a side view of the above Figure 15A is illustrated.

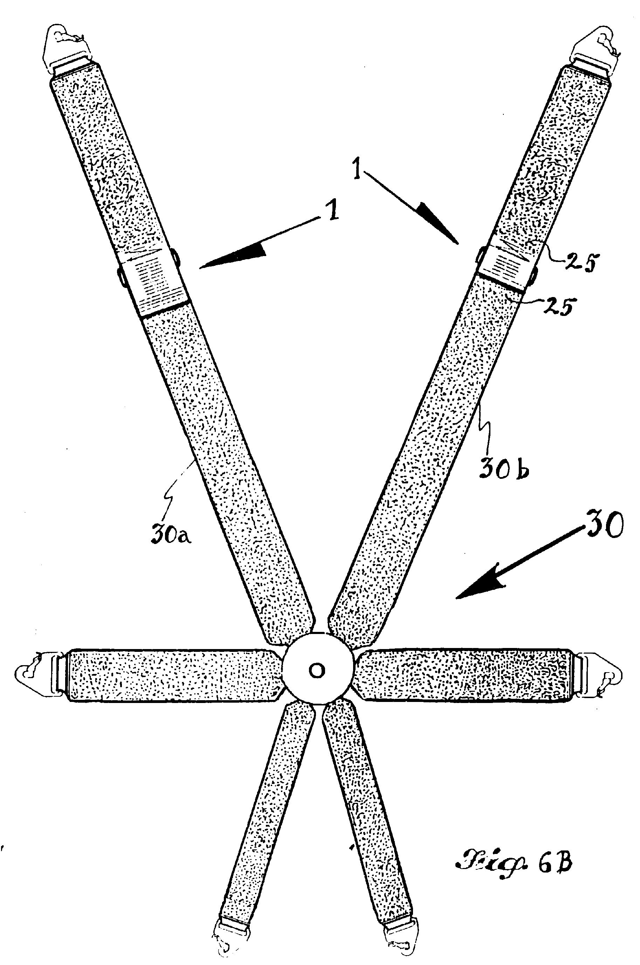

In Figure 6B the same safety belt 30 is illustrated onto which the element 1 of the invention has been also attached to the left shoulder belt 30b however with evident differentiation with regard to its smaller operational length in relation to the other.

According to the third alternative preferred application of the invention, as illustrated in Figures 3, 16A-B and 17A-B, element 1 proposed is an independent product before its connection to the end of the right shoulder strap of the safety belt operating just as the elements of Figures 1 and 2.

The element 1 of the third application as an end product matches with and includes whatever the element 1 of the first application does (Fig. 1) it is however adapted to the end of the edge 1d in addition to the fixed hook component 45 (Fig. 9) with which the element 1 is capable of being firmly fixed onto the frame of a motor vehicle and/or aircraft, consisting of a first uniform plate 45, with regard to which a first part consisting of the arm 45a is defined, at its transverse length, and a second part comprising of the hook 45b with lock 45c is also defined. Medially, between the two parts comprising of the arm 45a and the hook 45b the opening 39 is born.

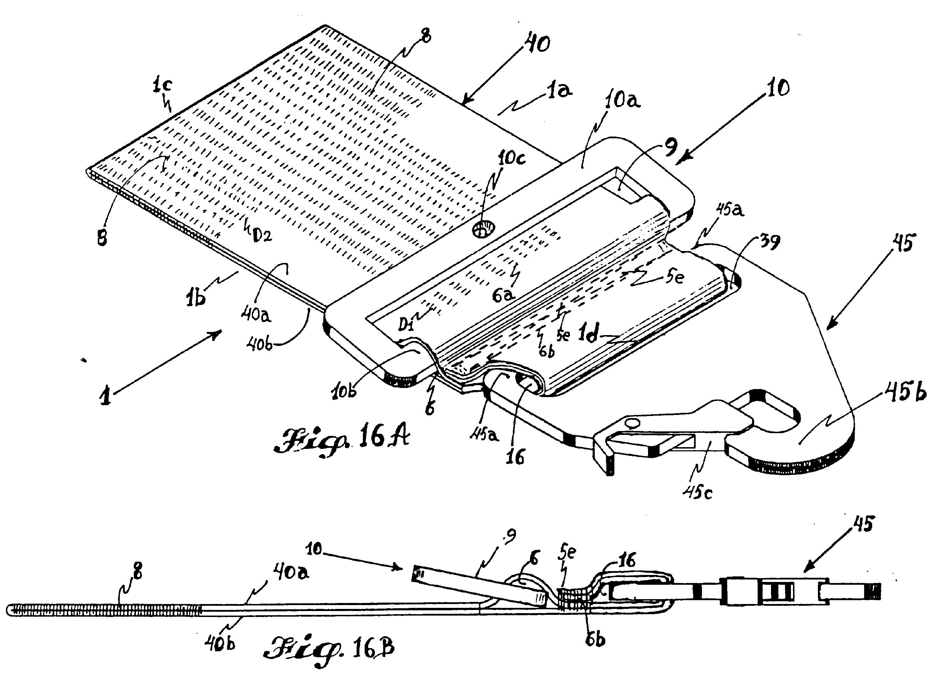

As illustrated in Figure 16A the element 1 is proposed to operate by means of a linear cutting off through the transverse seams 8. In this case the length of the shoulder strap 40 used is measured to be more than the double of the length of element 1 as this is offered as an independent end product so that the possibility of folding the shoulder strap 40 at the ends of edge 1 c is afforded.

According to the already illustrated application (Fig. 16A) a desirable number of transverse seams 8 of yarn stitches is provided that stitch in a predefined manner the adjacent sides 40a, 40b, widthwise and lengthwise, above and below the main surface of the strap 40. The transverse seams 8 extend from the upper extreme points 6a where cutting off commences until lower down at the folded ends of the strap 40, close to edge 1c, where the cutting off is terminated. At the end of edge 1d of the element 1, the free ends of sides 40a, 40b of the strap 40 form the opening 6 where the arm 10b of the mobile load transfer component 10 is inserted and thereafter the sides 40a and 40b are stitched at the points 5e by means of the yarn 6b. Then the end of edge 1d passes through the opening 39, folds and encloses the arm 45a of the fixed hook component 45 whereas afterwards the end of edge 1d is adjoined and resistantly stitched at the points 5e. Thus the arm 45a is trapped into the opening 16 formed and, as a result, the fixed hook component 45 cannot exit anymore being constrained by the transversely extended arm 45a extending widthwise the strap 40 that encircles it.

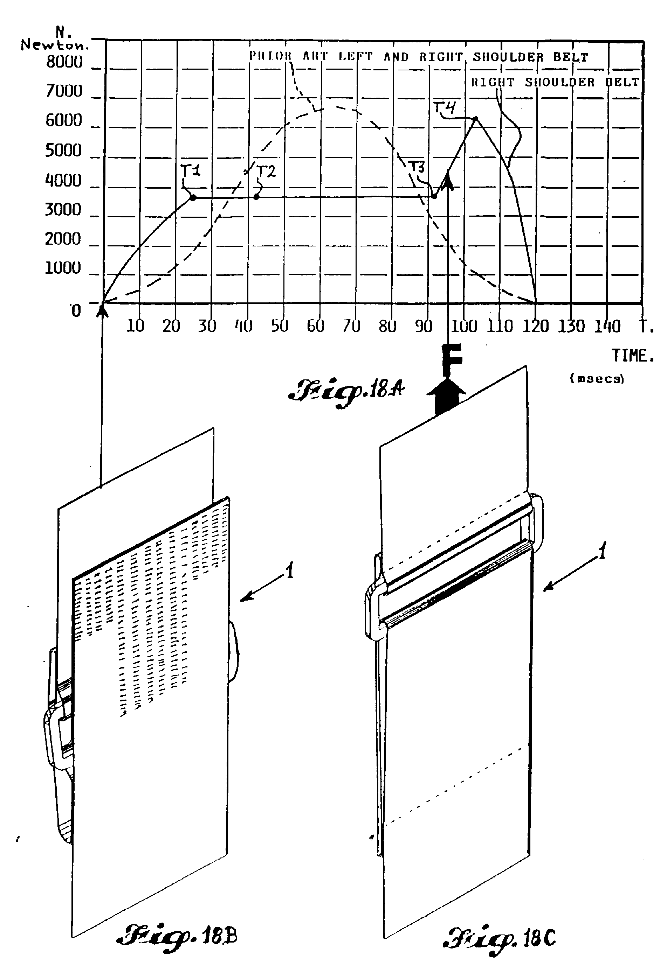

As illustrated in Figure 17A the mobile load transfer component 10 has been linearly shifted under the action of force F and in parallel to the main surface of element 1 whereas its arm 10b has cut the yarn seams 8 and terminated close to edge 1c of the element 1 resulting in the absorption of the energy derived from the suddenly exerted force during the deformation of element 1. The element of the third application is always posteriorly connected with the each time existing system that is adapted onto the end of the shoulder strap as the existing load transfer hook is distributed in the market being hooked into the hole lOc of the arm 10a of the mobile component 10.

The reason for this indirect connection of the shoulder strap with the element 1 being the fact that the shoulder strap should fluctuate at its end by means of the load transfer hook inserted so that it can be adapted to the each time fastened person.

The element 1 (Fig. 3) of the third preferred application of the invention is attached to the right shoulder strap whereas in addition to the left having a smaller length for the asymmetrical extension of the shoulder straps of the safety belt.

The elements 1 of all three applications (Figs. 1, 2, 3) of the invention in addition to their adaptation to the shoulder straps of the safety belt, it is possible to be correspondingly attached also to aviation type safety belts with two hooking points, which are primarily used in aircrafts. This type of seat belt with the lap strap envelops and keep firm the pelvis of the passengers' etc. body. Thus with the additional attachment of the element 1 of the invention to the safety belts of aircrafts with two hooking points. due to the beneficial adaptation of their small operational length during collision, the possibility of energy absorption by means of the small extension of the strap is provided and by extension the passenger's lesser projection to the front and therefore the avoiding of unpleasant consequences due to injury.

Next dynamic diagrams in which the action of the energy absorption elements of the invention are described compared to the results obtained when such elements are not used.

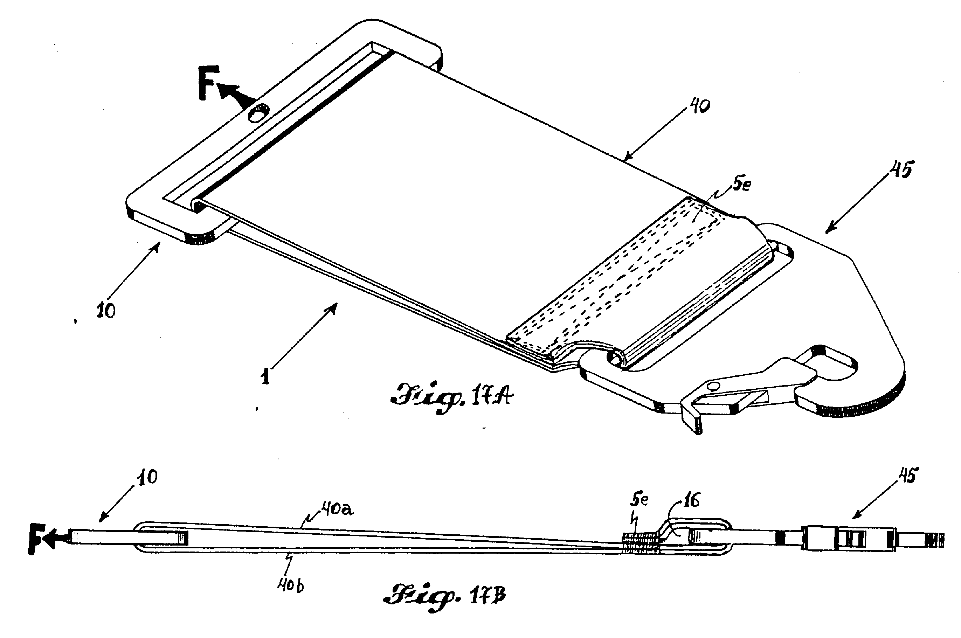

Indicatively referring to the dynamic diagram shown in Figure 18A that refers to the use of the energy absorption elements of the invention on safety belts designed for race cars and aircrafts, the operation of the left and the right shoulder strap of the safety belt without the energy absorption element of the invention is illustrated with discontinuous lines as a function of the force F exerted by the body of the under inertia moving to the front passenger in case of a head-on collision as to the time T from that point in time when the force is exerted (time T = 0 sec).

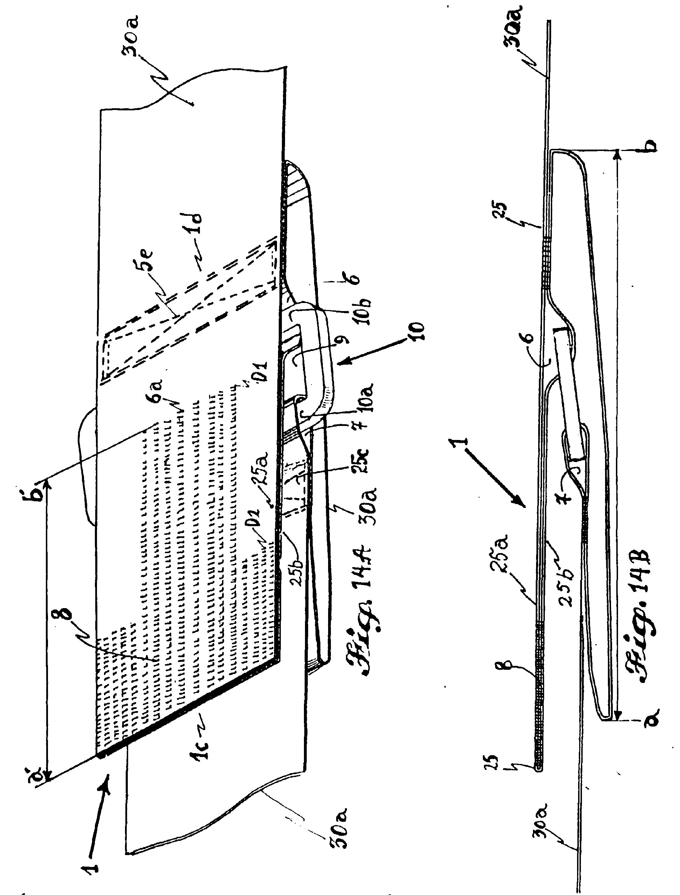

Firstly at the time Tl (approximately 22 msecs from the collision) the right-left shoulder straps of the safety belt are activated due to the under inertia moving to the front body of the passenger resulting in the gradual tightening of the shoulder straps onto the passenger's chest. As a result of this tightening the impact on the passenger's chest reaches a maximum on the order of 6500 -7000 N. In the case the energy absorption element of the invention illustrated in Figures 2 and 14A is used onto the right shoulder strap 30a of the safety belt 30 shown in Figure 6A the force exerted onto the right shoulder strap that is increased after having lapsed the time T1 is transferred to the energy absorption and anti-submerging element, the action of which commences at the time T2 (40 msecs approximately after the collision) when the force exerted on this becomes sufficient in order the cutting off is initiated of the seams 8 of the element 1 that lasts until the temporal point T3 (approximately 90 msecs after the collision) when having been completed the action of the energy absorption element the collision energy is unconstrainedly transmitted to the safety belt 30 (temporal term T3-T4) whereas there is no case of occurring the risk related to the exertion of an excessively high force onto the passenger's chest and, moreover, a reduction of the value of the acceleration of the head to the front (HIC-HEAD INJURY CRITERIA) is observed as to its smaller inflection length to the fastened driver's, pilot's etc. chestbone.

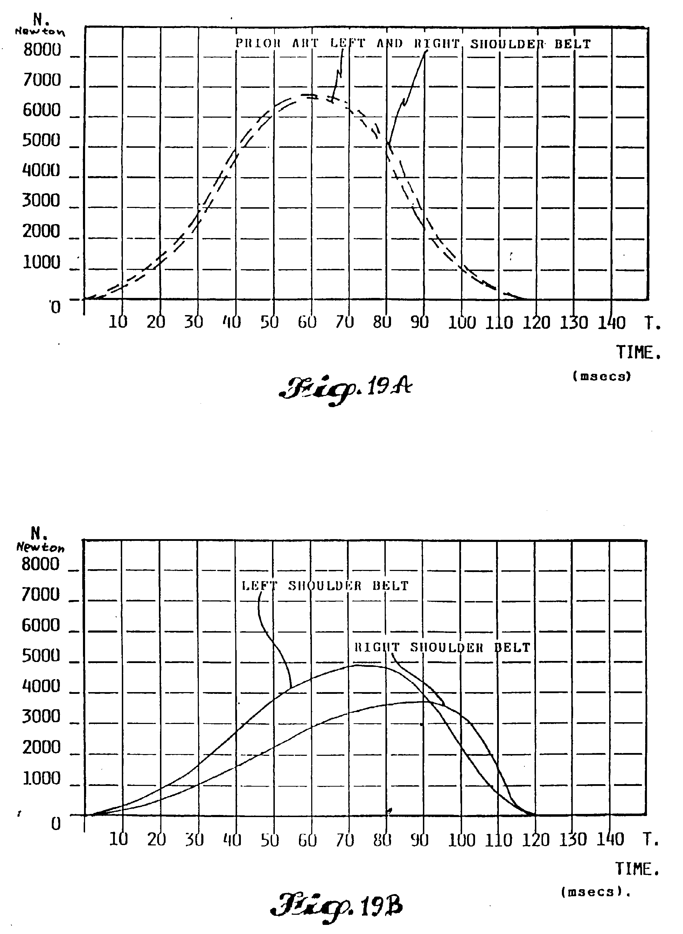

Following this, indicatively referring to the dynamic diagram illustrated in Figure 19A that refers to both shoulder straps, the right 30a and the left 30b of the safety belt 30 shown in Figure 6A, the operation of the two shoulder straps without the energy absorption and anti-submerging element is illustrated in discontinuous lines and, more precisely, the two shoulder straps are illustrated during the head-on collision as a function of the force F that is exerted onto the driver's etc. body.

The two shoulder straps illustrated with discontinuous lines (Fig. 19A) exhibit almost the same value of force F that is exerted by the fastened driver. As a result of the impact produced from the tightening of the shoulder straps onto the driver's etc. chest, the force F exerted by both straps reaches a maximum on the order of 7000 N.

Nevertheless, the diagram of Figure 19B refers to the safety belt 30 shown in Figure 6B provided the adaptation of element 1 onto the right shoulder strap 30a and the left shoulder strap 30b. The operational length of element 1 of the left shoulder strap 30b is much smaller than the element 1 of the right shoulder strap 30a thus offering a very small extension of the left shoulder strap 30b during collision as well as much smaller energy absorption than the other element 1 of the right shoulder strap 30a. However the absorbing capacity of this safety belt 30 is increased accompanied by a corresponding reduction of the possibilities of injury during collision also on the left side of the body trunk of the fastened motor vehicle driver etc. including the fact that the two shoulder straps are asymmetrically extending in relation to each other, implying that the right 30a is extended much more than the left 30b thus offering anti-submerging properties for the fastened driver since the right side of his/her body trunk is twisted much more to the front and thus his/her body does not glide through the lap strap of his/her pelvis with the result that he/she is not submerged to the front and is not injured. Besides in the above diagram the right shoulder strap 30a exhibits a greater temporal duration with regard to its extension in relation to the left shoulder strap 30b that extends within a smaller term. The force F exerted during collision onto the right shoulder strap 30a is reduced and becomes on the order of 3800 N whereas on the left shoulder strap 30b is reduced from its original value however now it is on the order of 5000 N.

In a similar to the above mentioned diagrams mode the elements 1 of the first and third application of the invention as shown in Figures 1 and 3 can be adapted.

It should be noted at this point that the description of the invention has been made with reference to indicative examples of applications bearing in mind that it is not limited to the latter. Thus, any alteration or modification as this regards the figures, sizes, arrangements, materials, structure and assembly components described as well as the techniques applied in the manufacture and operation of energy absorption elements of the invention since they do not consist a new invention and do not contribute to the technical development of the already known are considered as being included in the aims and scopes of the present invention, as they are being specified in the following Claims:

## Claims

1. Energy absorption element for safety belts with two shoulder straps adapted to the right shoulder strap worn by the driver of a motor vehicle and which is characterised by a generally oblong rectangular strap component, configured in such a manner as to include:
- an opening (6) that receives and traps an independent mobile component (10) that transfers a possible suddenly exerted onto the said strap force whereas the said mobile component (10) consists of a uniform plate with one part bearing an arm (10a) extending in parallel to the surface of the said strap and protruding through the said opening (6) where by means of the said arm (10a) the energy absorption element is connected to the said right shoulder strap bearing the suddenly exerted force and another part bearing a longitudinal rectangular opening (9) formed by the walls of the said arm (10a) as well as an arm (lOb) situated at the extreme end of and extending widthwise the said metallic plate, having a length that corresponds to the width of the said opening (6) where when at least part of the said strap passes through the opening (9) traps the said independent mobile component (10) that transfers the possible suddenly exerted force on the said strap.
- stitched sides of the said strap at the point (5e), close to the said opening (6) purposed to receive and trap the said independent mobile component (10) that transfers a possible suddenly exerted on the said strap force case in which by means of the said stitching (5e) the energy absorption element is connected at a fixed point, and
- predefined deformation seams (8), widthwise and lengthwise, above and below the main surface of the said strap, being arranged in such a manner so that when a suddenly exerted to the said right shoulder strap force occurs whereas this strap bears the energy absorption element and provided that this force exceeds that which is required for the initiation of the deformation lengthwise both the said predefined deformation seams and the said strap, this force changes during a certain predefined interval, which corresponds to the duration of the linear shifting of the said independent mobile component (10) from one end of the said strap to the other, to a tractive force of the said component (10) as well as deformation pressure exerting force of the said strap from the said linearly shifting arm (lOb) of the mobile component (10) that transfers the suddenly exerted force to the said strap.

2. Energy absorption element for safety belts with two shoulder straps, being adapted to the right shoulder strap worn by the driver of a motor vehicle according to the above Claim 1, which is characterised by the fact that the said strap comprises a longitudinal rectangular component (5), which is folded thus forming adjacent surfaces of equal size (5a, 5b) whereas the folded end determines the termination end of its run lengthwise the said strap of the said shifting mobile component (10) and the other meeting end of the free ends of the adjacent surfaces (5a, 5b) bears the said stitching (5e) of the sides of the said strap while it determines the initiation point of its run lengthwise the said strap (5) of the said shifting mobile component (10). The said predefined deformation seams are transverse seams (8) that stitch the adjacent, of equal size, surfaces (5a, 5b) extending from the said folded end to the said other meeting end of the free ends of the adjacent surfaces (5a, 5b) where the said seams (8) end slightly before the said meeting end of the free ends of the adjacent surfaces (5a, 5b) in order to create the said opening (6) for receiving and enclosing the said mobile component (10) where when a force occurs suddenly exerted to the shoulder strap (20) that bears the element and this force has a predefined value, then it is converted to a tractive force of the said linearly shifting component (10) and a deformation pressure force exerting onto the said strap (5) derived from the arm (lOb) of the component (10) a consequence of which is the cutting off of the said seams (8) and deformation of the adjacent surfaces (5a, 5b) of the strap lengthwise the predefined transverse seams (8) where the cutting off length equals to the length of the transverse seams (8) and determines the length of the run of the said mobile component (10) that transfers the suddenly exerted force onto the said strap (5).

3. Application of the energy absorption element, according to the above Claim 2 onto the right shoulder strap (20) of a safety belt where its said edge (1d) is stitched at the said point of the strap (20a), which is enclosed by the strap (20) that passes through the opening (9) of the said component (10) and the strap (20) encloses also the arm (10a) of the said component (10) at its opening (7) and the said sides (20b, 20c) are stitched at this point (20d).

4. Energy absorption element for safety belts with two shoulder straps, attached to the right shoulder strap worn by a motor vehicle driver, according to the above Claim 1, which is characterised by the fact that the said right shoulder strap (30a) of the safety belt (30) forms at the point (25) the sides (25a, 25b) that are stitched with the said seams (8) whereas the end of the said strap (30a) passes through the opening (9) of the said component (10) and surrounds the arm (10b) where at the point (5e) the said sides (25a, 25b) are stitched thus forming the opening (6) for trapping the arm (lOb) of the said component (10). Then the said strap (30a) is connected with the other arm (10a) of the said component (10) where the strap (30a) is folded passing through the opening (9) of the said component (10), encloses the arm (10a) at the opening (7) and traps the arm (10a) of the said component (10). Then the folded sides of the said strap (30a) are stitched at the point (25c) whereas when a force suddenly exerted onto the shoulder strap (30a) bearing the element occurs and this force has a predefined value, it is converted into a tractive force of the said linearly shifting component (10) and deformation pressure exerting force of the said strap (30a) derived from the arm (lOb) of the component (10), as a consequence of which the cutting off of the said seams (8) is implemented as well as the deformation of the adjacent surfaces (25a, 25b) of the strap lengthwise the predefined transverse seams (8) whereas the cutting off length equals to the length of the transverse seams (8) and determines the length of the run of the said mobile component (10) that transfers the suddenly exerted force on the said strap (30a).

5. Energy absorption element for safety belts with two shoulder straps, adapted at the right shoulder strap worn by a motor vehicle driver, according to the above Claiml, characterised by the fact that the said strap (40) is a longitudinal rectangular independent component that is folded in order to create adjacent surfaces of equal size (40a, 40b) whereas the folded end determines the termination end of its run lengthwise the said strap (40) of the said shifting mobile component (10) and the other meeting end of the free ends of the adjacent surfaces (40a, 40b) bears the said stitching (5e) of the sides of the said strap (40) and defines the initiation end of its run lengthwise the said strap (40) of the shifting said mobile component (10). The said seams (8) extend from the upper extreme points 6a where the cutting off commences until lower to the folded ends of the said strap (40), close to edge 1c, and then the edge (1d) of the said strap (40) passes through the opening (39) and traps the arm (45a) of the said hook (45) by forming the said opening (16) and the end of the said edge (1d) returns to the said point (5e) and is stitched and thus the arm (10b) of the said mobile component (10) is trapped into the said opening (6). When a suddenly exerted force onto the said right shoulder strap's end that bears the element whereas the latter is connected with the said strap through the hole (10c) of the arm (10a) whereas when this force has a predefined value it is converted into a tractive force of the said linearly shifting component (10) and deformation pressure exerting force of the said strap (40) derived from the arm (10b) of the component (10), a consequence of which the cutting off of the said seams (8) is performed as well as the deformation of the adjacent sides (40a, 40b) of the said strap (40) lengthwise the predefined transverse seams (8) whereas the cutting off determines the length of the run of the said component (10) that transfers the suddenly exerted force onto the said strap (40).

6. Energy absorption element for safety belts with two shoulder straps, attached to the right shoulder strap worn by a motor vehicle driver, according to the above Claim 5, characterised by the fact that the said fixed hook component (45) consists of a uniform plate with one of its parts comprising of an arm (45a) that protrudes through the said opening (16) extending in parallel to the surface of the said strap (40) where the energy absorption element is connected by means of the said arm (45a) to the said strap (40) of the element and another part that bears a longitudinal rectangular opening (39) formed by the walls of the said arm (45a) and an extreme extending lengthwise the said metallic plate hook (45b) with lock (45c) whereas the element is hooked at a fixed point onto the motor vehicle's and/or aircraft's frame.

7. Energy absorption element for safety belts with two shoulder straps, attached to the right shoulder strap worn by a motor vehicle driver, according to any of the above Claims 1-6, whereas the length of the element remains the same before and after its action and the length of the transferred to the right shoulder strap extension allowed corresponds to the linear length of the run of the connected onto the right strap said independent mobile component (10) that transfers the suddenly exerted to the element force.

8. Energy absorption element for safety belts with two shoulder straps, attached to the right shoulder strap worn by a motor vehicle driver, according to any of the above Claims 1-7, whereas the nominal energy value that the element is capable to absorb during its action is defined in conjunction with the length of the element, the number of seams (8) of the strap surfaces' stitching, the length of each transverse seam (8) whereas with the lengthwise differentiation of the strap of the element with regard to any combination of parameters concerning the number of seams (8) and the lengthwise - widthwise stitching of the adjacent surfaces of the element's strap, the energy absorption element exhibits a variable lengthwise resistance, which is consequently activated within a wide range of predefined values of the suddenly exerted force.

9. Energy absorption element for safety belts with two shoulder straps, attached to the right shoulder strap worn by a motor vehicle driver, according to any of the above Claims 1-8, whereas the energy absorption element is adapted also to the left shoulder strap of the safety belt worn by the car driver however with a smaller operational length in relation to the said right shoulder strap of a safety belt and the length of the transferred onto the left shoulder strap extension allowed corresponds to the linear length of run of the connected to the left strap said independent mobile component (10) that transfers the suddenly exerted onto the element force.

10. Energy absorption element for safety belts with two shoulder straps, attached to both the right and left shoulder straps worn by a motor vehicle driver or the crew of an aircraft, according to any of the above Claims 1-9, whereas the weft-knitted body of the strap of which the energy absorption element consists as well as the said independent mobile component (10) and the said fixed hook component (45) are manufactured by any suitable known and in current use materials or others that may be applied in the future and any alteration or modification as this regards the figures, sizes, arrangements, materials, structure and assembly components described as well as the techniques applied in the manufacture and operation of energy absorption elements since they do not consist a new invention and do not contribute to the technical development of the already known are considered as being included in the aims and scopes of the present invention, as they are being specified in the above Claims.
